Europäisches Patentamt

European Patent Office

Office européen des brevets

(19)

(11) Veröffentlichungsnummer: **0 175 921**
**B1**

(12) **EUROPÄISCHE PATENTSCHRIFT**

(45) Veröffentlichungstag der Patentschrift: **13.06.90**

(51) Int. Cl.⁵: **B 29 C 45/14** // H01M2:06

(21) Anmeldenummer: **85110489.3**

(22) Anmeldetag: **21.08.85**

(54) **Verfahren und Vorrichtung zur Kunststoffumspritzung von Zellenpolen an fertigen Plattensätzen.**

(30) Priorität: **22.09.84 DE 3434900**

(43) Veröffentlichungstag der Anmeldung:
**02.04.86 Patentblatt 86/14**

(45) Bekanntmachung des Hinweises auf die
Patenterteilung:
**13.06.90 Patentblatt 90/24**

(84) Benannte Vertragsstaaten:
**AT DE FR GB IT SE**

(56) Entgegenhaltungen:
**EP-A-0 029 491
FR-A-2 412 951
GB-A- 130 717
US-A-3 652 340
US-A-4 235 832
US-A-4 419 796**

**PATENT ABSTRACTS OF JAPAN, Band 8, Nr.
264 (E-282)1701r, 4. Dezember 1984; & JP-A-59
138 055 (YUASA DENCHI K.K.) 08-08-1984**

(73) Patentinhaber: **VARTA Batterie
Aktiengesellschaft
Am Leineufer 51
D-3000 Hannover 21 (DE)**

(72) Erfinder: **Bechtold, Dieter, Dipl.-Ing.
Am Wetterhahn 2
D-6000 Frankfurt 56 (DE)**
Erfinder: **Eckardt, Rudolf
Obergasse 30
D-6374 Steinbach (DE)**

(74) Vertreter: **Kaiser, Dieter Ralf, Dipl.-Ing.
Gundelhardtstrasse 72
D-6233 Kelkheim/Ts. (DE)**

**Beschreibung**

Die Erfindung betrifft ein Verfahren zur Aufbringung einer Kunststoffummantelung auf die Polschäfte der Zellenpole eines elektrischen Akkumulators, welche bereits an den fertig montierten und in einer Aufnahmekassette einbaugerecht gehalterten Plattensatz angegossen sind, sowie eine Vorrichtung zur Durchführung dieses Verfahrens.

Bei Akkumulatoren werden mit Vorteil Bleipole verwendet, die zur Abdichtung gegen den Gehäusedeckel mit einer Kunststoffummantelung versehen und so durch einen Deckeltubus entsprechender Weite hindurchgeführt sind, daß allein aufgrund des reibschlüssigen Kontaktes zwischen der Polbeschichtung und dem Kunststoff des Tubus ein guter, den Dichtigkeitsansprüchen genügender Paßsitz gewährleistet ist. Eine solche Polabdichtung ist beispielsweise der DE—OS 27 57 568 entnehmbar. Sie verbessert die konventionelle Praxis, die darin besteht, daß Bleibuchsen in den Deckel eingelassen oder eingespritzt werden müssen und daß nach der Batteriemontage eine zumeist umständliche Verschweißung der Buchse mit dem polschaft erfolgt.

Nach einem anderen bekannten Verfahren gemäß JP—A—59 138 055 werden die Endpolschäfte einer bis auf den Deckel fertig montierten Batterie ebenfalls mit Kunststoff umspritzt, jedoch so, daß der obere Rand der Umspritzung ein wenig vom Polschaft absteht und sich in gleicher Höhe mit dem Rand des Blockkastens befindet. Dies macht eine vollkommene Abdichtung des Batteriedeckels sowohl gegen das Gehäuse als auch gegen die Endpole mit Hilfe des Spiegelschweißens möglich.

Der Zwang zu immer kürzeren Rüstzeiten in der Akkumulatorenfertiging-eine Folge des wachsenden Automatisierungsgrades - hat dazu geführt, daß heute nach einem modifizierten cast on straps (COS)-Verfahren Polbrücken und Zellenpole einschließlich Poleinlagen aus z.B. Messing in einem einzigen Arbeitsgang an bereits komplett montierte und einbaugerecht von einer Aufnahmekassette gehalterte Plattensätze angeschmolzen werden können. Dieser Umstand entzieht die Pole andererseits der Möglichkeit einer nachträglichen Einzelbearbeitung und macht insbesondere auch eine Kunststoffumspritzung, weil sich die Pole gegenseitig in nur geringem Abstand im Wege stehen, zu einem Problem.

Der Erfindung liegt somit die Augabe zugrunde, ein Verfahren anzugeben, mit welchem eine Kunststoffbeschichtung der Polschäfte sicher und rationell durchführbar ist. Die Aufgabe wird erfindungsgemäß mit Hilfe der im kennzeichnenden Teil des Anspruchs 1 angegebenen Maßnahmen gelöst.

Eine spezielle und besonders vorteilhafte Vorbehandlung der Bleipole im Rahmen der Erfindung besteht in der Einbringung umlaufender Vertiefungen oder Rillen in die zunächst glatten Polschäfte. Dadurch werden eine gite Verankerungsmöglichkeit für den Kunststoff und zugleich ein vor Elektrolytaustritt schützenderausgedehnter Kriechweg geschaffen.

Zum Auskehlen der Vertiefungen dient ein in einem Fräserkopf befestigter Kamm, welcher bei koaxialer Ausrichtung des Fräskopfes auf einen Pol in paralleler Stellung zur Polachse perpendikular um diesen umläuft und sich dabei unter radial einwärts gerichtetem Druck in die Oberfläche des Polschaftes eingräbt. Der Fräsvorgang wird in einem festgelegten Zeittakt am zweiten Zellenpol wiederholt, nachdem die Aufnahmekassette mitsamt dem Plattensatz vom Fräswerkzeug zurückgezogen und nach einer seitlichen Verschiebung um die Poldistanz erneut gegen das Werkzeug vorgefahren worden ist.

Die Vorbearbeitung der Pole und die eigentliche Kunststoffbeschichtung gemäß der Erfindung werden anhand der Figuren 1 bis 4 verdeutlicht.

Figur 1 zeigt die Fräsbehandlung der Zellenpole.

Figur 2 zeigt ein der erfindungsgemäßen Polummantelung dienendes Spritzwerkzeug.

Figur 3 zeigt die Lage eines Zellenpols in der Spritzform.

Figur 4 zeigt einen speziellen Ausschnitt des Spritzwerkzeuges in einer Vergrößerung.

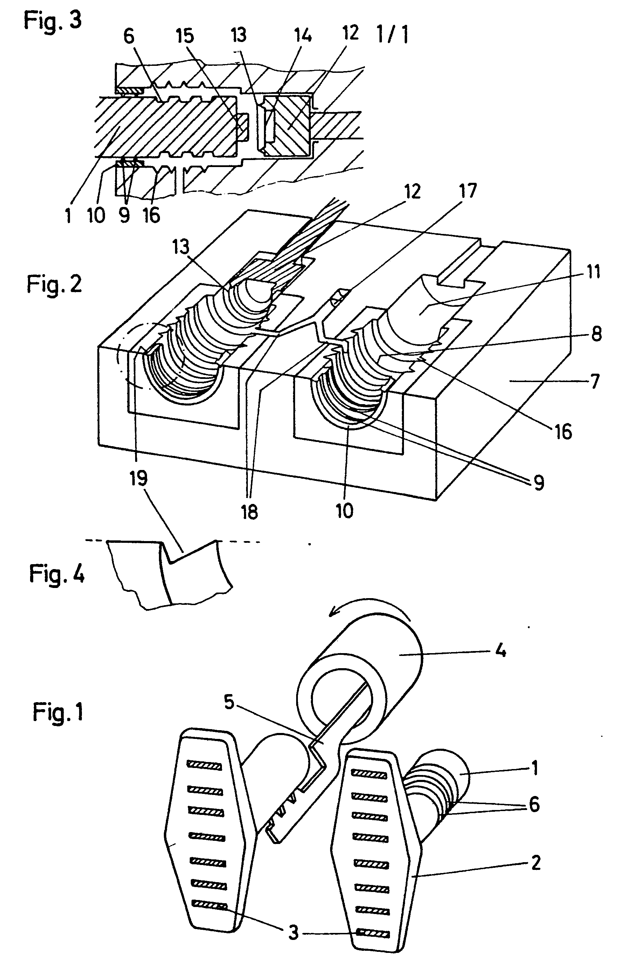

Die Pole 1 der Figur 1 sitzen mit ihren Polbrükken 2 einem vollständig montierten und einbaugerecht gehalterten Plattensatz, der nur durch die Spuren 3 der positiven und negativen Ableiterfahnen angedeutet ist, unmittelbar auf. Ihr gegenseitiger Abstand ist also bereits identisch mit demjenigen in der fertigen Zelle. Ein Fräswerkzeug ist auf eine Verschiebbarkeit in der Horizontalen entsprechend der Poldistanz exakt einjustiert und führt den mit dem Fräskopf 4 umlaufenden Fräskamm 5 zuerst an den einen, dann an den anderen Pol heran. Die Fräsvorgänge lassen an den Polschäften die Vertiefungen 6 zurück.

Für die nachfolgende Ummantelung der Polschäfte mit Kunststoff ist nun erfindungsgemäß ein aus zwei Hälften bestehendes Zweifach-Spritzwerkzeug 7 vorgesehen, welches nach Figur 2 (eine Hälfte) im wesentlichen aus zwei mit den Polen korrespondierenden zylindrischen Hohlformen 8 besteht, in welche die Zellenpole mit ihrem fest vorgegebenen Abstand einschiebbar sind und deren Innenradius um die Dicke der vorgesehenen Kunststoffbeschichtung größer ist als der Radius eines Polschafts. Nur im Eingangsbereich sind die Hohlformen durch mit umlaufenden Erhebungen 9 versehene Dichtmanschetten 10 auf den angenäherten Querschnitt der Polschäfte verengt, so daß die Pole nach Einführung in die Formen gegen diese nahe der Basis und am Schaftumfang abgedichtet sind.

Eine stirnseitige Abdichtung der Pole wird dadurch erzielt, daß die Hohlformen des Spritzwerkzeuges in der Tiefe zu napfartigen Verlängerungen 11 (Spritznest) von geringerem Durchmesser übergehen, in denen zylindrische Schieber 12 koaxial zur Hohlform bewegbar und damit, wie in Figur 3 gezeigt wird, gegen die Stirnfläche des bis zum Ende der Hohlform hereinragenden Poles 1 anpreßbar sind. Eine ringförmige Schneidkante 13 gräbt sich dabei leicht in das verhältnismäßig weiche Blei des Polkopfes ein und stellt so die eigentliche Abdichtung her. Eine stirnseitige Einsenking 14 des Schiebers nimmt den Uberstand der Poleinlage 15 auf. In Figur 3 befindet sich der Schieber in zurückgezogener Position.

Figur 2 läßt weiterhin an den Innenwänden der Hohlformen umlaufende Vertiefungen 16 erkennen, die sich ebenfalls mit Spritzmasse füllen und an der fertigen Kunststoffummantelung die für eine dichte Poldurchführung unerläßlichen, einstückig angeformten Dichtlippen bilden.

Die beiden Hohlformen kommunizieren miteinander über symmetrisch aus der Kunststoff-Zuführungsleitung 17 abgezweigte Einspritzkanäle 18.

## Patentansprüche

1. Verfahren zur Aufbringung einer Kunststoffummantelung auf die Polschäfte der Zellenpole eines elektrischen Akkumulators, welche bereits an den fertig montierten und in einer Aufnahmekassette einbaugerecht gehalterten Plattensatz angegossen sind, dadurch gekennzeichnet, daß mittels eines Fräswerkzeugs innerhalb der mit Kunststoff zu beschichtenden Bereiche umlaufende Vertiefungen (6) in die Polschäfte (1) eingebracht werden, daß die Kassette darauf mit den Polen voraus gegen ein Spritzwerkzeug (7) gefahren wird, welches die Pole in korrespondierenden Hohlformen (8) aufnimmt, wobei die Pole sowohl stirnseitig als auch nahe der Basis am Umfang ihrer Schäfte gegen die Hohlformen abgedichtet sind, und daß der zwischen jedem Polschaft und der umgebenden Hohlform verbleibende Ringspalt durch Einspritzung mit schmelzflüssigem Kunststoff ausgefüllt wird.

2. Verfahren nach Anspruch 1, dadurch gekennzeichnet, daß das Fräswerkzeug von einem koaxial zu jedem der Pole ausrichtbaren Fräskopf (4) und einem an diesem befestigten, um die Polachse perpendicular imlaufenden Fräskamm (5) gebildetust.

3. Verfahren nach den Ansprüchen 1 und 2, dadurch gekennzeichnet, daß die Kinststoffummantelung mit unmittelbar angespritzten umlaufenden Erhebungen versehenust.

4. Vorrichtung zur Durchführung des Verfahrens nach den Ansprüchen 1 bis 3, dadurch gekennzeichnet, daß für die Umspritzung der an einem fertig montierten Plattensatz bereits angegossenen Zellenpole (1) in einem aus zwei Hälften bestehenden Zweifachwerkzeug (7) zwei mit den Polen korrespondierende und in dem gleichen gegenseitigen Abstand wie jene angeordnete zylindrische Hohlformen (8) vorgesehen sind, in welche die Zellenpole einschiebbar sind, wobei der Innenradius jeder Hohlform den Radius der zylindrischen Polschäfte um die Dicke der vorgesehenen Kunststoffbeschichtung übertrifft, daß zur stirnseitigen Abdichtung der Pole jede Hohlform eine napfartige Verlängerung (11) von geringerem Durchmesser (Spritznest) mit einem darin koaxial zur Hohlform bewegbaren zylindrischen Schieber (12) besitzt, der mit einer vorderseitig ausgebildeten ringförmigen Schneidkante (13) gegen die Stirnseite des Pols andrückbar ist, daß die Eingänge der Hohlformen durch ringförmige und mit umlaufenden Erhebungen (9) versehene Dichtmanschetten (10) auf den angenäherten Querschnitt der Polschäfte verengt sind, daß die Innenwände der Hohlformen zumindest über einen Teil ihrer Längserstreckung mit umlaufenden Vertiefungen (16) versehen sind und daß beide Hohlformen über symmetrisch aus einer Kunststoff-Zuführungsleitung (17) abgezweigte Einspritzkanäle (18) kommunizieren.

5. Vorrichtung nach Anspruch 4, dadurch gekennzeichnet, daß in der Trennebene beider Werkzeughälften Freiräume (19) für Abfallspäne vorgesehen sind.

## Revendications

1. Procédé pour déposer un enrobage de matière plastique sur les bornes d'un accumulateur électrique qui est coulé sur le faisceau de plaques déjà montées et maintenues correctement dans une cassette de réception, caractérisé en ce que sont réalisées par une fraise, des rainures (6) circulaires dans les bornes (1) dans les zones à enrober de matière plastique, la cassette avec les bornes est placée contre un outil d'injection (7) qui reçoit les bornes dans des moules creux correspondants (8), où les bornes sont rendues étanches vis-à-vis du moule, aussi bien frontalement qu'à proximité de la base des bornes et périphériquement, et l'espace annulaire entre chaque borne et le moule creux qui l'entoure est rempli par injection de matière plastique fondue.

2. Procédé selon la revendication 1, caractérisé en ce que l'outil de fraisage est constitué d'une tête de fraise (4) s'étendant coaxialement aux bornes et d'un peigne fraiseur (5), fixé à elle, tournant perpendiculairement autour de l'axe de la borne.

3. Procédé selon les revendications 1 et 2, caractérisé en ce que l'enrobage de matière plastique est constitué de lèvres circulaires obtenues lors de l'injection.

4. Dispositif pour réaliser le procédé selon les revendications 1 à 3, caractérisé en ce que pour enrober les bornes (1) déjà soudées sur un faisceau de plaques déjà montées, sont prévus dans un outil à deux empreintes (7) constitué de deux moitiés, deux moules creux cylindriques correspondants aux bornes et situés au même écartement, dans lesquels peuvent s'insérer les bornes, le rayon interne de chaque moule creux excède le rayon des bornes cylindriques de l'épaisseur de l'enrobage de matière plastique prévu, chaque moule creux possède pour l'étanchéité frontale des bornes, un prolongement en coupelle (11) de diamètre plus faible (nid d'injection), avec un tiroir cylindrique (12) qui y est mobile coaxialement, qui peut être appuyé par son bord coupant (13) annulaire frontal contre la face frontale de la borne, les entrées des moules creux sont rendues étanches par des lèvres d'étanchéité (10) munies de proéminences (9) circulaires, approximativement de la section des bornes, les parois internes des moules creux sont munies, au moins sur une partie longitudinale, de rainures circulaires (16) et les deux moules creux communiquent symétriquement par des canaux d'injection (18) divergents depuis le canal principal d'arrivée de matière plastique (17).

5. Dispositif selon la revendication 4, caractérisé en ce que, dans le plan de joint des deux moitiés d'outil, sont prévus des espaces libres (19) pour les copeaux résiduels.

**Claims**

1. Method for applying a plastic material sheathing to the pole shafts of the cell poles of an electric storage battery, which are already cast on the finally assembled set of plates mounted in a receiving case in a manner suitable for installation, characterised in that peripheral recesses (6) are introduced into the pole shafts (1) by means of a milling tool within the regions to be coated with plastic material, that the case is then moved with the poles in front towards an injection tool (7), which receives the poles in corresponding hollow moulds (8), the poles being sealed both on the end face as well as close to the base, on the periphery of their shafts, with respect to the hollow moulds and that the annular gap remaining between each pole shaft and the surrounding hollow mould is filled by injection with molten plastic material.

2. Method according to Claim 1, characterised in that the milling tool is formed by a milling head (4) able to be aligned coaxially with respect to each of the poles and a milling comb (5) attached thereto and rotating perpendicularly around the pole axis.

3. Method according to Claims 1 and 2, characterised in that the plastic material sheathing is provided with directly injection-moulded peripheral elevations.

4. Apparatus for carrying out the method according to Claims 1 to 3, characterised in that for the injection-moulding of the cell-poles (1) already cast on a finally assembled set of plates, in a twin tool (7) consisting of two halves, two cylindrical hollow moulds (8) are provided, corresponding to the poles and arranged with the same mutual spacing as those into which the cell poles can be inserted, the inner radius of each hollow mould exceeding the radius of the cylindrical pole shafts by the thickness of the plastic material coating provided, that for sealing the end face of the poles, each hollow mould comprises a bowl-shaped elongation (11) of smaller diameter (injection nest) with a cylindrical slide (12) able to move therein coaxially with respect to the hollow mould, which slide can be pressed with an annular cutting edge (13) formed on the front side, against the front end of the pole, that the inlets of the hollow moulds are restricted by annular sealing sleeves (10) provided with peripheral elevations (9) to the approximate cross-section of the pole shafts, that at least over part of their longitudinal extent, the inner walls of the hollow moulds are provided with peripheral recesses (16) and that both hollow moulds communicate by way of injection channels (18) branched symmetrically from a plastic material supply pipe (17).

5. Apparatus according to Claim 4, characterised in that provided in the separating plane of both tool halves are free spaces (19) for waste cuttings.

Fig. 3

Fig. 2

Fig. 4

Fig. 1

1 / 1

1